# EUROPEAN PATENT SPECIFICATION

(11) **EP 3 292 292 B1**
(45) Date of publication and mention of the grant of the patent: **19.02.2020**
(21) Application number: 15725689.2
(22) Date of filing: 05.05.2015
(51) Int. Cl.: F02D 41/30, F02D 41/40, F02D 41/04, F02D 19/10

(54) **A METHOD OF OPERATING AN INTERNAL COMBUSTION PISTON ENGINE, A CONTROL SYSTEM FOR CONTROLLING THE OPERATION OF AN INTERNAL COMBUSTION PISTON ENGINE, AND AN INTERNAL COMBUSTION PISTON ENGINE**
VERFAHREN ZUM BETRIEB EINES HUBKOLBENMOTORS, STEUERSYSTEM ZUR STEUERUNG DES BETRIEBS EINES HUBKOLBENMOTORS UND HUBKOLBENMOTOR
PROCÉDÉ DE FONCTIONNEMENT D'UN MOTEUR À PISTONS À COMBUSTION INTERNE, SYSTÈME DE COMMANDE DESTINÉ À COMMANDER LE FONCTIONNEMENT D'UN MOTEUR À PISTONS À COMBUSTION INTERNE, ET MOTEUR À PISTONS À COMBUSTION INTERNE

(43) Date of publication of application: 14.03.2018
(73) Proprietor: Wärtsilä Finland Oy, 65100 Vaasa (FI)
(72) Inventor: ELEJAGA, Mikel, FI-65100 Vaasa (FI); BACKMAN, Fredrik, FI-65100 Vaasa (FI); CAFARI, Alberto, FI-65100 Vaasa (FI); HELLMAN, Kenneth, FI-65100 Vaasa (FI)
(74) Representative: Genip Oy
(86) International application number: PCT/FI2015/050301
(87) International publication number: WO 2016/177931

(56) References cited:
- EP-A1- 1 923 556
- WO-A1-2014/094156
- US-A1- 2003 221 661
- US-A1- 2005 161 017
- US-A1- 2006 032 477
- US-A1- 2011 088 655
- US-A1- 2011 288 751

## Description

### Technical field

The present invention relates to a method of operating an internal combustion piston engine according to the preamble of claim 1. The present invention relates also to a control system for controlling the operation of an internal combustion piston engine.

The present invention relates also to an internal combustion piston engine comprising a control system.

### Background art

Even if large engines in power production generally operate with somewhat moderate load changes there are situation when substantially fast load changes are required. In this context large engines are considered to be such piston engines in which more than 150kW power per cylinder may be generated.

There is a problem relating particularly to engines in marine vessels, in which the ability of increasing the engine load rapidly is an important safety feature. It is typically required that load steps between 0-33%, 33-66% and 66-100% engine load may be provided in order to rapidly provide steering power for the vessel. If such a rapid increase in the power may not be achieved it may cause insufficient manoeuvring capacity and therefore even dangerous situations. Another problem, particularly in installations where the engine is directly connected to the propeller shaft, is the sudden variation of load the engine will experience when operating in rough seas.

With engines installed in power plants producing electric and/or heat power it has also become more and more important to be able to take on load very fast and to provide a stable combustion. As an aspect relating to the operation of power plant engines is the increasing number of wind power systems connected to the electric grid, which has also resulted in a more volatile grid frequency. To improve the stability of the grid frequency, the so-called grid codes, which lays down rules, guidelines and/or standards to be followed by the various operators in the power grid system to plan, develop, maintain and operate the power system in efficient, reliable, economic and secure manner, have been made more stringent, where non-wind power plants are required to support the grid frequency in a larger extent than before.

A large gas engine operates advantageously so that the mixture of air and gaseous fuel in the cylinder has more air than is needed for complete combustion. Lean combustion reduces peak temperatures and, therefore, NOX emissions. Efficiency is increased and higher output is reached while avoiding knocking. Combustion of the lean air-fuel mixture is initiated by injecting a small amount of liquid pilot fuel, like light fuel oil (LFO) into the cylinder. The pilot fuel is ignited in a conventional diesel process, providing a high-energy ignition source for igniting the air - gaseous fuel mixture in the combustion chamber of the engine.

For large changes in the engine load, the engine hence becomes inclined to cylinder knock and misfire, which potentially may cause limitation in the load taking.

WO 2012080568 A2 discloses a method of operating an internal combustion piston engine in transient load change, which engine uses gaseous fuel as its main fuel and liquid fuel as a pilot fuel. The method comprises the steps of determining a ratio of the amount of the gaseous fuel and the amount of the liquid fuel to be introduced into the combustion chamber is determined based on said one or more signals indicative to engine's load. In the event of one of more signals indicative of the engine's load is increased the ratio of amount of introduced gaseous fuel to amount of introduced liquid fuel is changed. The ratio of the amount of the gaseous fuel and the amount of the liquid fuel to be introduced into the combustion chamber is determined so that time derivative of the one or more signals being indicative of the engine's load is defined.

Particularly gas engines can be very sensitive to charge air pressure and temperature deviations so affecting the compression temperature and pressure at the pilot fuel injection timing. A problem during the transient operation like fast loading and load steps is that the charge air pressure is often below the reference value affecting undesirably to the pilot fuel ignitability so yielding poor and unstable combustion or even to misfiring.

US 2011/288751 A1, US 2006/032477 A1, US 2003/221661 A1, US 2011/088655 A1, WO 2014/094156 A1 and US 2005/161017 A1 disclose relevant prior art forming background to this invention.

### Disclosure of the Invention

It is an object of the invention to provide a method of operating an internal combustion piston engine which provides more flexible, safe and reliable operation and wherein above mentioned problems are minimized.

An object of the invention is met by a method of operating an internal combustion piston engine according to claim 1, which uses main fuel, pilot fuel for igniting the main fuel, the method comprising the steps of:
- acquiring one or more signals being indicative to the engine's operation condition,
- generating a base timing instruction and a base duration instruction for pilot fuel introduction based on said one or more signals indicative to the engine's operation condition,
- introducing main fuel into a combustion chamber of the engine,
- acquiring a transient load status based on said one or more signals indicative to the engine's operation condition,
- in an event of the transient load status is non-confirmative, igniting the main fuel in the combustion chamber by introducing pilot fuel into the combustion chamber of the engine using the base timing and the base duration instructions
- and in an event of the transient load status is confirmative, the base timing instruction is corrected with a timing compensation value resulting in a corrected timing instruction and the base duration instruction is corrected with a duration compensation value resulting in a corrected duration instruction, and
- igniting the main fuel in the combustion chamber by introducing pilot fuel into the combustion chamber of the engine using the corrected timing and the corrected duration instructions.

This way it is possible to obtain a more stable and robust combustion process engine. Particularly, it is possible to improve the stability and the robustness of the combustion during the transient status is confirmative.

With the present invention it is possible to decrease a risk of misfire and/or cylinder knocking of a gaseous fuel operated duel fuel engine.

According to the invention, the method comprises steps of measuring a charge air pressure and acquiring the timing compensation value based on a measured charge air pressure.

According to the invention, the method comprises steps of measuring a charge air pressure and acquiring the duration compensation value based on a measured charge air pressure. The base duration instruction for pilot fuel introduction and the duration compensation value are used for defining a period of time during which the pilot fuel is injected.

According to the invention, the method comprise steps of measuring a charge air pressure and acquiring the timing compensation value based on a difference between the measured charge air pressure and a predetermined reference pressure value. Advantageously, the predetermined reference pressure is acquired as a function of load of the engine. According to an embodiment of the invention, the timing compensation value is acquired as a function of the measured charge air pressure and the difference between the measured charge air pressure and the predetermined reference pressure value.

The base timing value and the timing compensation values are preferably presented as crank angle value. According to an embodiment of the invention, the corrected timing instruction is presented with respect to a crank angle position before the top dead center (BTDC) position.

According to the invention, the method comprises steps of measuring a charge air pressure and acquiring the duration compensation value based on, or as a function of a difference between a measured charge air pressure and a predetermined reference pressure value.

According to an embodiment of the invention, the method comprises a step wherein the corrected duration instruction is obtained by adding the duration compensation value to the base duration instruction. Thus, in case the compensation value is positive the corrected duration instruction is greater than the base duration instruction, and respectively in case the compensation value is negative the corrected duration instruction is smaller than the base duration instruction.

According to an embodiment of the invention, the method comprises a step wherein the corrected timing instruction is obtained by adding the timing compensation value to the base timing instruction. Thus, in case the timing compensation value is positive the corrected timing instruction is greater than the base timing instruction, resulting in a more advanced timing than the base timing because the corrected timing instruction is farther away from the TDC. Respectively in case the compensation value is negative the corrected timing instruction is smaller than the base timing instruction resulting in a more retarded timing than the base timing because the corrected timing instruction is closer to TDC.

According to an embodiment of the invention, at low and/or partial load operation of the engine the duration compensation value is positive, and at high load operation of the engine the duration compensation value is negative. Low and/or partial load is according to an embodiment of the invention defined as being between 10 % and 65 % of the engine's full load (100%).

According to an embodiment of the invention, at low and/or partial load the timing compensation value is negative resulting in a more retarded timing than the base timing.

According to an embodiment of the invention, at high load the duration instruction is reduced in the event of the transient load status is confirmative. High load is defined as being between 65 % and 100 % of the engine's full load.

There may occur circumstances during which according to an embodiment of the invention, at high load the duration instruction is kept a same as in the base duration instruction even in the event of the transient load status is confirmative.

According to an embodiment of the invention, at high load the timing is retarded or kept a same as in the base timing instruction in the event of the transient load status is confirmative.

According to an embodiment of the invention, the base timing instruction is generated as a function of engine load and engine speed. According to an embodiment of the invention, the base duration instruction is generated by a function of engine load and engine speed.

According to an embodiment of the invention, the transient load status is acquired by a function of engine load and engine speed. According to an embodiment of the invention, the transient status of the operation of the engine is confirmative for example in at least following circumstances: during a predetermined load change and/or during a predetermined BMEP (break mean effective pressure) change. The transient status of the operation of the engine is confirmative according to an embodiment of the invention for example in at least one of the following circumstances: load change rate differs from a predetermined load change limit rate; change rate of BMEP (Break Mean Effective Pressure) differs from a predetermined BMEP (Break Mean Effective Pressure) limit rate. The predetermined limit rates are engine specific.

According to an embodiment of the invention, the timing compensation value is acquired from a predefined map of distinct values of crank angle positions. According to an embodiment of the invention, the distinct values of the crank angle position can be acquired from a function of the measured charge air pressure and the difference between the measured charge air pressure and the reference charge air pressure. In other words, the predefined map of distinct values may form a matrix wherefrom the timing compensation value is acquired.

According to an embodiment of the invention, the distinct values of the crank angle position can be acquired from a function of a measured BMEP (Break Mean Effective Pressure) and the difference between the measured BMEP (Break Mean Effective Pressure) and the reference charge air pressure.

According to an embodiment of the invention, the duration compensation value is acquired from a predefined map of distinct values of the duration compensation values corresponding to the measured charge air pressure and the difference of the measure charge air pressure and the predetermined reference pressure. In other words, the predefined map of distinct values may form a matrix wherefrom the duration compensation value is acquired.

According to an embodiment of the invention, the duration compensation value is acquired from a predefined map of distinct values of the duration compensation values corresponding to the measured BMEP (Break Mean Effective Pressure and the difference of measured BMEP (Break Mean Effective Pressure) and the predetermined reference pressure.

An object of the invention is met by a control system for controlling an operation of an internal combustion piston engine according to claim comprising:
- a signal receiver unit being arranged to receive one or more signals being indicative to the engine's operation condition,
- a first control unit arranged to control introduction of main fuel into a combustion chamber of the engine, and
- a transient load detection unit arranged to detect a transient load status based on said one or more signals indicative to the engine's operation condition,
- a second control unit arranged to control the introduction of pilot fuel into the combustion chamber of the engine, comprising executable instructions to
- acquire the transient load status
- in an event of the transient load status is non-confirmative, igniting the main fuel in the combustion chamber by introducing pilot fuel into the combustion chamber of the engine using the base timing and the base duration instructions,
- in an event of the transient load status is confirmative, correcting a base timing instruction with a timing compensation value resulting in a corrected timing instruction and correcting a base duration instruction with a duration compensation value resulting in a corrected duration instruction, and
- igniting the main fuel in the combustion chamber by introducing pilot fuel into the combustion chamber of the engine using the corrected timing and the corrected duration instructions.

According to the invention, the control system comprises a pressure measuring unit arranged to measure a charge air pressure.

According to the invention, the second control unit comprises instructions to correct the base timing instruction with the timing compensation value resulting in the corrected timing instruction based on the measured charge air pressure.

According to the invention, the second control unit comprises instructions to correct the base duration instruction with the duration compensation value resulting in the corrected duration instruction based on the measured charge air pressure.

According to the invention, the second control unit comprises instructions to correct the base timing instruction with the timing compensation value resulting in the corrected timing instruction based on a difference between the measured charge air pressure and a predetermined reference pressure value.

According to the invention, the second control unit comprises instructions to correct the base duration instruction with the duration compensation value resulting in the corrected duration instruction based on a difference between the measured charge air pressure and a predetermined reference pressure value.

According to an embodiment of the invention, the second control unit comprises instructions to detect when the transient load status has reached its end point. When the end point is reached, the transient load status is no longer confirmative. Then there is not needed to correct the base timing and/or the base duration instruction.

Objects of the invention are also met by an internal combustion piston engine operating with gaseous fuel, wherein the engine comprises a control system described above. According to an embodiment of the invention, the engine is a turbo charged pilot fuel ignited lean burn gas engine wherein the engine comprises a control system according to anyone of the apparatus claims defining the control system for controlling an operation of an internal combustion piston engine.

### Brief Description of Drawings

In the following, the invention will be described with reference to the accompanying exemplary, schematic drawings, in which;
Figure 1 illustrates an embodiment of the invention,
Figure 2 illustrates a method of operating a of internal combustion piston engine according to an embodiment of the invention, and
Figure 3 illustrates an exemplary graph of pressure curve with respect to a crank angle according to an embodiment of the invention.

### Detailed Description of Drawings

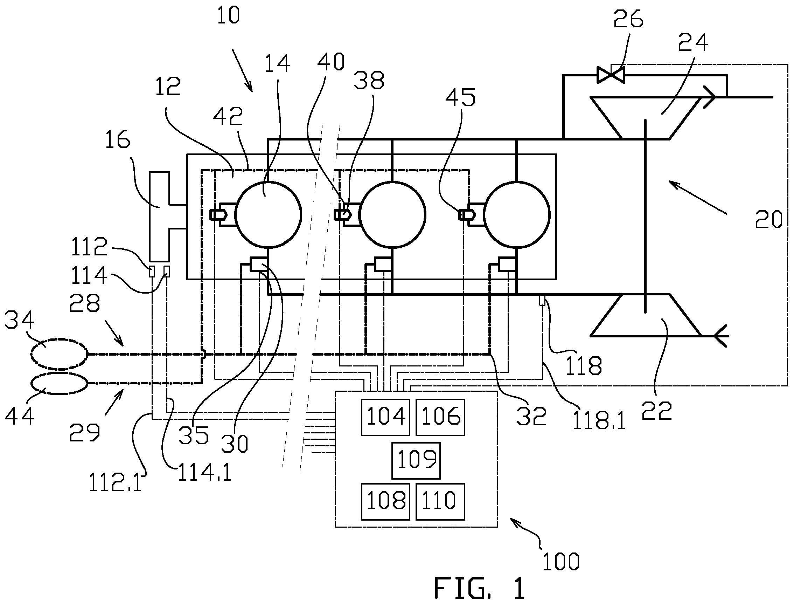

Figure 1 shows schematically an engine 10, which is adapted to combust a main fuel by making use of a pilot fuel for igniting the mail fuel. The engine 10 is provided with a body or block 12 and its cylinders 14 therein. During the operation of the engine mechanical power is obtained via its crank shaft 16 which is typically provided with a fly wheel. The engine is provided with a supercharger 20. The supercharger 20, depending on its type, comprises at least one compressor part 22 by means of which oxygen containing gas may be introduced into the combustion chamber of the engine in the cylinders thereof. Typically the oxygen containing gas is ambient air, but the gas may also contain recycled exhaust gas. Advantageously the supercharger is a turbocharger in which the compressor part 22 is driven by a turbine part 24 making use of the energy obtained from the exhaust gas of the engine. The turbo charger turbine part 24 is provided with a waste gate 26 which allows the exhaust gas to bypass the turbine part and thus control the work performed by the compressor part 22 and the charge pressure created by the compressor part 22.

The engine 10 is provided with a gaseous fuel feeding system 28 arranged to introduce the main fuel, which is here gaseous fuel into each combustion chamber of the engine according to its working cycle. The gaseous fuel feeding system 28 comprises gaseous fuel admission valves 30 in connection with an intake channel upstream the intake valves (not shown) of each cylinder head. Each gaseous fuel admission valve is connected to a gaseous fuel supply line 32 feeding the fuel from a source of gaseous fuel 34.

Additionally the engine 10 is provided with a pilot fuel feeding system 29 arranged to introduce pilot fuel into each combustion chamber or a pre-chamber 40 thereof of the engine according to its working cycle in order to ignite the gaseous fuel in the combustion chamber of the engine. In the figure 1 the pilot fuel feeding system 29 comprises fuel injection valves 38 in connection with the pre-chamber 40. It should be, however, noted that the injection valves of the pilot fuel feeding system can be arranged directly in connection with the combustion chamber. Therefore, the invention is not limited only to an embodiment where the fuel injection valves are in connection with the pre-chamber. Each fuel injection valve 38 is connected to a fuel supply line 42 feeding the fuel from a source of pilot fuel 44. The fuel supply line 42 may comprise a so called common rail system (not disclosed). The pilot fuel may be liquid fuel, for example, light fuel oil.

The engine 10 is also provided with a control system 100. The control system 100 is arranged to control an operation of the engine 10. The control system 100 comprises a signal receiver unit 104. The signal receiver unit 104 is arranged to receive one or more signals from one or more measurement device arranged in connection with the engine. The signal receiver unit 104 is arranged to receive one or more signals being indicative to engine's operation condition. Specifically, the signal receiver unit 104 is arranged to receive one or more signals being indicative to the engine's load and/or engine's speed. The signal receiver unit 104 may also be arranged to have information or have access to information of predetermined reference values. Additionally, the control system 100 comprises a first control unit 106 arranged to control the introduction of main fuel into the combustion chamber of the engine 10. The control system further comprises a transient load detection unit 108 arranged to detect a transient load status based on said one or more signals indicative to the engine's load. Advantageously, the transient load detection unit 108 arranged to detect a transient load status based on the engine load and the engine speed.

The control system 100 also includes gaseous fuel feeding actuators 35 and pilot fuel feeding actuators 45 for actuating the opening and closing of the gaseous fuel admission valves 30 and pilot fuel injection valves 38 under control of the control system, respectively. Additionally the control system includes a source of signal of engine speed 112 and a source of signal of engine load 114. A signal of engine speed from the source of signal of engine speed 112 is transferred to the control system 100 via a communication line 112.1. A signal of engine load from the source of signal of the engine load 114 is transferred to the control system 100 via a communication line 114.1. A source of signal comprises a measurement system adapted to provide information to generate the signal representing the respective target of measurement.

The control system 100 is further provided with a second control unit 110 arranged to control the introduction of pilot fuel into the combustion chamber of the engine 10. The second control unit 110 comprises executable instructions to 1) acquire a transient load status from the transient load detection unit 108, and 2) in an event of the transient load status is non-confirmative, igniting the main fuel in the combustion chamber by introducing pilot fuel into the combustion chamber of the engine using a base timing instruction and/or a base duration instruction. Additionally, second control unit 110 comprises executable instructions to 3) in an event of the transient load status is confirmative, correcting the base timing instruction with a timing compensation value resulting in a corrected timing instruction and/or correcting the base duration instruction with a duration compensation value resulting in a corrected duration instruction, and 4) igniting the main fuel in the combustion chamber by introducing pilot fuel into the combustion chamber of the engine using the corrected timing and/or the corrected duration instructions.

According to an embodiment of the invention, the control system 100 comprises a pressure measuring unit 109 arranged to measure a charge air pressure. The control system 100 includes a source of signal, such as a measurement system of a charge air pressure 118. A signal indicating the charge air pressure is transferred to the control system 100 via a communication line 118.1 which connects the measurement system 118 with the control system 100. According to an embodiment of the invention, the control system 100 is provided with a predetermined reference pressure stored therein or made available otherwise to the control system. The control system 100 is provided with instructions to compute a difference between the measured charge air pressure and the predetermined reference pressure for making use for operation of the control system 100. The second control unit 110 is provided with instructions to correct the base timing instruction with the timing compensation value resulting in the corrected timing instruction based on the measured charge air pressure.

The second control unit 110 is further provided with instructions to correct the base duration instruction with the duration compensation value resulting in the corrected duration instruction based on the measured charge air pressure.

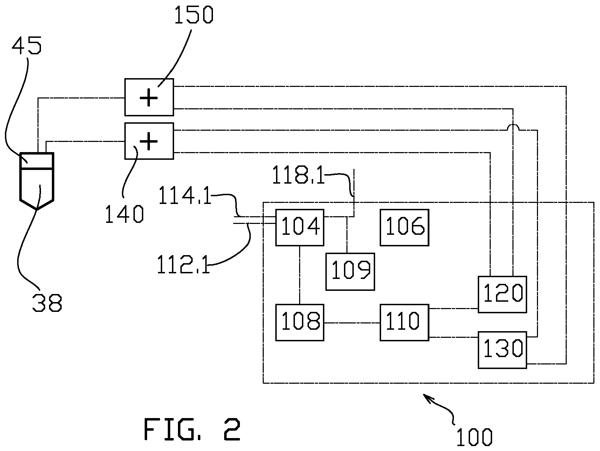

Figure 2 illustrates schematically in more detail the control system 100 being in connection with the pilot fuel feeding actuators 45 and the pilot fuel injection valves 38 of one cylinder for sake of simplicity. Same reference numbers are used for indicating same features in Figure 1 and in Figure 2. In this embodiment, the control system 100 is provided with a memory system such as a base map 120 that comprises a base timing instruction and a base duration instruction for pilot fuel introduction. The base map 120 is arranged in communication with the second control unit 110. The base timing instruction and the base duration instruction are based on one or more signals indicative to engine's load and/or engine's speed received from the signal receiver unit 104. Advantageously, the base map comprises base timing and duration values corresponding engine's load and/or engine's speed. The values stored in the base map are used as such, or without correction, in the event of the transient load status is non-confirmative. Advantageously, the base map, i.e. memory system comprises matrices with base timing and base duration values.

The control system 100 comprises a first processing unit 140 arranged to process the timing instruction for use to control the operation of the pilot fuel injector. The first processing unit 140 is arranged to receive the base timing instruction or more particularly a value for the base timing instruction from the base map 120. The control system 100 comprises also a second processing unit 150 arranged to process the duration instruction for use to control the operation of the pilot fuel injector. The second processing unit 150 is arranged to receive the base duration instruction, or more particularly a value from the base duration instruction from the base map 120. The first processing unit 140 and the second processing unit 150 are arranged to take into account correcting timing and duration instructions according to the invention, if necessary and will be discussed more in detail later. However, in an event of the transient load status is non-confirmative, the main fuel is ignited by introducing pilot fuel into the combustion chamber of the engine using solely the base timing and/or base duration instructions.

In this embodiment, the memory system of the control system 100 is provided also with a compensation map 130 that comprises compensation timing values and compensation duration values for use in case of the event of the transient load status is confirmative.

Advantageously, the timing compensation value is acquired in response to a measured charge air pressure. According to an embodiment, the charge air pressure is measured and the timing compensation value is acquired based on a difference between the measured charge air pressure and the predetermined reference pressure value. This way, even if during transient operation like fast increase of engine load the charge air pressure may be temporarily below a reference value, it is possible to control the pilot fuel injection and thus the main fuel ignition so as to avoid the inadequate pressure affecting undesirably pilot fuel ignitability, and preventing poor and unstable combustion or even to misfiring. Advantageously, the compensation map is a predefined map of distinct values of crank angle indicating the compensation timing values

The duration compensation value is acquired in response to a measured charge air pressure. Advantageously, the charge air pressure is measured and the duration compensation value is acquired based on a difference between the measured charge air pressure and the predetermined reference pressure value.

By controlling the pilot fuel injection timing and duration when transient load status is confirmative and where the measured charge air pressure deviates from the reference pressure value, it is possible to obtain a more stable and robust combustion without affecting the steady state operation settings.

In the event of the transient load status is confirmative, a signal from the transient load unit 108 is transferred to the second control unit 110. In the event of the transient load status is confirmative, the timing compensation value from the compensation map 130 is transferred to the first processing unit 140. In the first processing unit 140, the timing compensation value is added to the value from the base timing instruction resulting in a corrected timing instruction. In the event of the transient load status is confirmative, the duration compensation value from the compensation map 130 is transferred to the second processing unit 150. In the second processing unit 150, the duration compensation value is added to the value from the base duration instruction resulting in a corrected duration instruction. Thus, a plus sign indicates in the first processing unit 140 and in the second processing unit 150 a summation operation. Then the main fuel in the combustion chamber is ignited by introducing pilot fuel into the combustion chamber of the engine by using the corrected timing and/or the corrected duration instructions. According to an embodiment of the invention, at low and/or partial load operation of the engine, the duration compensation value is positive and at high load operation of the engine the duration compensation value is negative or zero. According to an embodiment of the invention, at low and/or partial load operation of the engine, the timing compensation value is negative and at high load the timing is retarded or kept as a same as in the base timing instruction which means that the timing compensation value is less than or equal to zero.

Referring to both the figure 1 and figure 2 the method of operating an internal combustion piston engine with dual fuel operation is practised so that at least one or more signal indicative to the engine load is detected or otherwise determined. The signals indicative to engine load may be determined based on one or several measurements of the engines operational parameters. As is shown in figure 1 one such measurement is engine speed 112. A signal indicative to engine load may be provided in many ways using direct or indirect measurements and other information.

The following a simplified example illustrates a method of operating an internal combustion piston engine and an introduction of pilot fuel into the combustion chamber according to an embodiment of the invention. It should be, however, noted that the scope of the invention is not limited to the following numerical values. The second control unit is arranged to control the introduction of pilot fuel into the combustion chamber of the engine. The second control unit may comprise a base duration instruction as a predefined map of values as shown in Table 1.

**Table 1: The first row indicates engine load (BMEP) [MPa], the first column indicates engine speed [rpm] and other cells indicate base duration values in microseconds [µs].**

| | 0.2 [MPa] | 0.5 | 1.1 | 2.0 |
|---|---|---|---|---|
| 500 [rpm] | 800 [µs] | 700 | 500 | 600 |
| 700 | 900 | 700 | 600 | 600 |
| 1200 | 500 | 500 | 750 | 600 |

According to Table 1, the base duration values are given by a duration map and they are a function of engine speed and engine load.

The second control unit comprises also a base timing instruction as a predefined map of values as shown in Table 2.

**Table 2: The first row indicates engine load [MPa], the first column indicates engine speed [rpm] and other cells indicate base timing values with respect to crank angle position [°CA] from the top dead center position.**

| | 0.2 [MPa] | 0.5 | 1.1 | 2.0 |
|---|---|---|---|---|
| 500 [rpm] | 10 [°CA] | 5 | 30 | 40 |
| 700 | 30 | 15 | 30 | 40 |
| 1200 | 30 | 35 | 40 | 40 |

According to Table 2, the base timing values are given by a timing map and they are a function of engine speed and engine load.

Respectively, the second control unit comprises a predefined map of the duration compensation values as shown in Table 3. The duration compensation values are acquired as a function of a measured charge air pressure or BMEP value and a difference between the measures charge air pressure and a reference charge air pressure.

**Table 3: The first row indicates the measured charge air pressure at a certain crank angle position [MPa], the first column indicates the difference between the measured charge air pressure and the predetermined reference air pressure [MPa] and other cells indicate compensation duration values in microseconds [µs].**

| | 0.1 [MPa] | 0.2 | 0.3 | 0.5 |
|---|---|---|---|---|
| -0.5 [MPa] | 300 [µs] | -50 | -100 | 0 |
| -0.01 | 100 | -10 | 0 | 0 |
| 0.005 | 0 | 0 | 0 | 0 |

According to an embodiment of the invention, the corrected duration instruction is obtained by adding the duration compensation value to the base duration instruction.

As an example, let the transient load status be confirmative. Let the engine load be 0.5 MPa, engine speed be 700 rpm, the measured charge air pressure be 0.2 MPa and the difference between the measured charge air pressure and the predetermined reference pressure be -0.01 MPa. Then the compensation duration value is negative that is -10 µs according to Table 3 and the base duration value is 700 µs according to Table 1. A value for the corrected duration instruction is obtained by adding the duration compensation value to the value of the base duration instruction i.e. -10 µs + 700 µs = 690 µs. In other words, the duration of the introduction of pilot fuel is reduced compared to the value in the base duration instruction.

Respectively, the second control unit may comprise a predefined map of the timing compensation values as shown in Table 4. The timing compensation values are acquired as a function of a measured charge air pressure and a difference between the measures charge air pressure and a reference charge air pressure.

**Table 4: The first row indicates the measured charge air pressure at a certain crank angle position [MPa], the first column indicates the difference between the measured charge air pressure and the predetermined reference air pressure [MPa] and other cells indicate compensation timing values with respect to crank angle position [°CA].**

| | 0.1 [MPa] | 0.2 | 0.3 | 0.5 |
|---|---|---|---|---|
| -0.05 [MPa] | -15 [°CA] | -5 | -1 | 0 |
| 0.01 | -5 | -1 | 0 | 0 |
| 0.005 | 0 | 0 | 0 | 0 |

According to an embodiment of the invention, the corrected timing instruction is obtained by adding the timing compensation value to the base timing instruction. As an example, let the transient load status be confirmative. Similarly as earlier, let the engine load be 0.5 MPa, engine speed be 700 rpm, the measured charge air pressure be 0.2 MPa and the difference between the measured charge air pressure and the reference charge air pressure be 0.01 MPa. Then the compensation timing value is negative that is -1 °CA according to Table 4 and the base timing value is 15 °CA according to Table 2. A value for the corrected timing instruction is obtained by adding the timing compensation value to the value of the base timing instruction i.e. -1 °CA + 15 °CA = 14 °CA. In other words, the timing of the introduction of pilot fuel is retarded (it is closer to TDC) compared to the value in the base timing instruction.

Tables 3 and 4 show that the compensation duration and compensation timing values may comprise zero values indicating that there is no need to correct the base duration and/or base timing instructions. Tables 1-4 are shown herein just for illustrative purposes only and to clarify more clearly the steps of the method according to an embodiment of the invention. The predefined duration map and the predefined timing map can vary from engine to engine. According to an embodiment of the invention, the values in the maps must be tuned at least once in order to improve the combustion stability in a confirmative transient load status. At low and/or partial loads the duration of the pilot fuel introduction is increased compared to base duration instruction and the timing is retarded compared to base timing instruction. At high load the duration of the pilot fuel introduction is reduced or kept same as the base duration instruction compared to base duration instruction and timing is retarded or kept same as the base timing instruction.

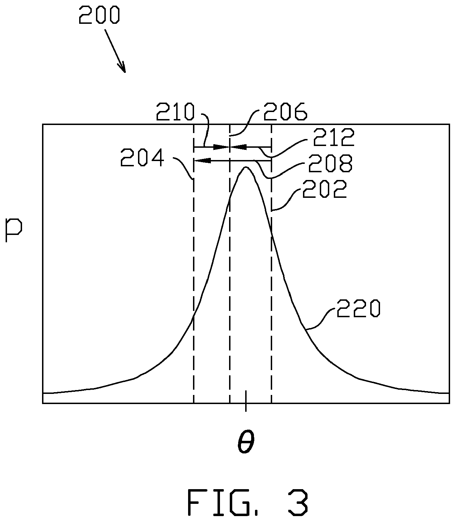

Figure 3 illustrates schematically an exemplary case wherein the timing introduction of pilot fuel is retarded. This means that the compensation timing value is negative. A graph 200 illustrates a compression curve 220. A crank angle position *θ* is illustrated in the horizontal axis and pressure p in the cylinder of the engine is illustrated in the vertical axis. The top dead center (TDC) position is illustrated as a vertical line 202. The top dead center position 202 is used as a zero axis value when defining the base timing value and corrected timing instruction. Positive axis direction when defining the base timing value and corrected timing instruction is defined from right to left. A vertical line 204 illustrates the base timing value and a vertical line 206 illustrates the corrected timing instruction. The compensation timing value, indicated with reference 210, is negative (negative direction is indicated by an arrow from left to right) and thus the corrected timing instruction 206 is closer the top dead center (TDC) position 202. A length indicated with reference 208 is the base timing value. A length of line 212 indicates the corrected timing instruction.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. A method of operating a gas engine (10), which uses main gaseous fuel and pilot liquid fuel for igniting the main gaseous fuel, wherein combustion of the lean air-fuel mixture is ignited by injecting a small amount of liquid pilot fuel and igniting the pilot fuel in diesel process, the method comprising steps of:
- measuring charge air pressure of the engine,
- generating a base timing instruction and a base duration instruction for pilot liquid fuel introduction based on said one or more signals indicative to the engine's operation condition,
- introducing main gaseous fuel into a combustion chamber of the engine via an intake channel of the engine,
- acquiring a transient load status based on said one or more signals indicative to the engine's operation condition,
- in an event of the transient load status is non-confirmative, igniting the main fuel in the combustion chamber by introducing pilot fuel into the combustion chamber of the engine using the base timing and the base duration instructions,
- and in an event of the transient load status is confirmative,
• the base timing instruction is corrected with a timing compensation value acquired as a function of the measured charge air pressure and difference between the measured charge air pressure and a predetermined reference pressure value, resulting in a corrected timing instruction and the base duration instruction is corrected with a duration compensation value based on, or as a function of a difference between the measured charge air pressure and a predetermined reference pressure value, resulting in a corrected duration instruction, and
- igniting the main gaseous fuel introduced via the intake channel of the engine in the combustion chamber by introducing pilot liquid fuel into the combustion chamber of the engine using the corrected timing and duration instructions.

2. A method according to claim 1, **characterized by** igniting the main gaseous fuel in the combustion chamber by introducing pilot liquid fuel into a pre-chamber of the engine using the corrected timing and the corrected duration instructions.

3. A method according to claim 1, **characterized by** in an event of the transient load status is confirmative correcting the base duration instruction with a duration compensation value resulting in a corrected duration instruction obtained by adding the duration compensation value to the base duration instruction and igniting the main gaseous fuel introduced via the intake channel of the engine in the combustion chamber by introducing pilot liquid fuel into the combustion chamber of the engine using the corrected duration instructions.

4. A method according to anyone of claims 1-3, **characterized in that** the corrected timing instruction is obtained by adding the timing compensation value is to the base timing instruction.

5. A method according to anyone of claims 1-3, **characterized in that** at low and/or partial load the timing compensation value is negative, resulting in a more retarded timing than the base timing.

6. A method according to anyone of claims 1-4, **characterized in that** at high load the duration is reduced in the event of the transient load status.

7. A method according to anyone of claims 1-5, **characterized in that** at high load the timing is retarded or kept a same as in the base timing instruction in the event of the transient load status.

8. A method according to anyone of claims 1-7, **characterized in that** the timing compensation value is acquired from a predefined map of distinct values of crank angle.

9. A control system (100) for controlling an operation of piston gas engine (10) using main gaseous fuel and pilot liquid fuel for igniting the main gaseous fuel, wherein combustion of the lean air - fuel mixture is ignited by injecting a small amount of liquid pilot fuel and igniting the pilot fuel in diesel process, comprising:
- a pressure measuring unit (109) arranged to measure a charge air pressure,
- a signal receiver unit (104) being arranged to receive a measured charge air pressure,
- a first control unit (106) arranged to control the introduction of main gaseous fuel into a combustion chamber of the engine via an intake channel of the engine, and
- a transient load detection unit (108) arranged to detect a transient load status based on said one or more signals indicative to the engine's operation condition,
- a second control unit (110) arranged to control the introduction of pilot fuel into the combustion chamber of the engine, using a base timing instructions and base duration instructions comprising executable instructions to
• acquire the transient load status
• in an event of the transient load status is non-confirmative, igniting the main fuel in the combustion chamber by introducing pilot fuel into the combustion chamber of the engine using the base timing instructions and base duration instructions,
• In an event of the transient load status is confirmative, correcting a base timing instruction with a timing compensation value as a function of measured charge air pressure and difference between the measured charge air pressure and a predetermined reference pressure value, resulting in a corrected timing instruction, and/or correcting the base duration instruction with a duration compensation value based on, or as a function of a difference between the measured charge air pressure and a predetermined reference pressure value, resulting in a corrected duration instruction, and
• igniting the main gaseous fuel in the combustion chamber by introducing pilot liquid fuel into the combustion chamber of the engine (10) using the corrected timing and duration information.

10. An internal combustion piston engine (10) operating with gaseous fuel, **wherein** the engine (10) comprises a control system (100) according to the claim 9 and the engine (10) is provided with a pilot fuel feeding system (29) arranged to introduce pilot fuel into a pre-chamber 40 of each combustion chamber of the engine.

## Patentansprüche

1. Verfahren zum Betreiben eines Gasmotors (10), welcher einen gasförmigen Hauptkraftstoff und einen flüssigen Pilotkraftstoff zum Entzünden des gasförmigen Hauptkraftstoffs verwendet, wobei die Verbrennung des Gemisches aus magerer Luft und Kraftstoff durch Einspritzen einer kleinen Menge des flüssigen Pilotkraftstoffs und Entzünden des Pilotkraftstoffs im Dieselprozess entzündet wird, wobei das Verfahren die folgenden Schritte umfasst:
- Messen eines Ladeluftdrucks des Motors,
- Erzeugen einer Basis-Timing-Anweisung und einer Basis-Dauer-Anweisung für die Einführung eines flüssigen Pilotkraftstoffs auf der Basis eines oder mehrerer Signale, die den Betriebszustand des Motors anzeigen,
- Einführen des gasförmigen Hauptkraftstoffs in eine Brennkammer des Motors über einen Einlasskanal des Motors,
- Erfassen eines transienten Lastzustands auf der Basis des einen oder der mehreren Signale, die den Betriebszustand des Motors anzeigen,
- falls der transiente Lastzustand nichtbestätigend ist, Entzünden des Hauptkraftstoffs in der Brennkammer durch Einführen eines Pilotkraftstoffs in die Brennkammer des Motors unter Verwendung der Basis-Timing- und der Basis-Dauer-Anweisungen,
- und falls der transiente Lastzustand bestätigend ist,
• die Basis-Timing-Anweisung wird mit einem Timing-Ausgleichswert korrigiert, der als eine Funktion des gemessenen Ladeluftdrucks und eine Differenz zwischen dem gemessenen Ladeluftdruck und einem vorbestimmten Referenzdruckwert erfasst wird, was zu einer korrigierten Timing-Anweisung führt, und die Basis-Dauer-Anweisung wird mit einem Dauer-Ausgleichswert auf Basis oder als eine Funktion einer Differenz zwischen dem gemessenen Ladeluftdruck und einem vorbestimmten Referenzdruckwert korrigiert, was zu einer korrigierten Dauer-Anweisung führt, und
- Entzünden des gasförmigen Hauptkraftstoffs über den Einlasskanal des Motors in der Brennkammer durch Einführen eines flüssigen Pilotkraftstoffs in die Brennkammer des Motors unter Verwendung der korrigierten Timing- und Dauer-Anweisungen.

2. Verfahren nach Anspruch 1, **gekennzeichnet durch** das Entzünden des gasförmigen Hauptkraftstoffs in der Brennkammer durch das Einführen eines flüssigen Pilotkraftstoffs in eine Vorkammer des Motors unter Verwendung der korrigierten Timing- und der korrigierten Dauer-Anweisungen.

3. Verfahren nach Anspruch 1, **gekennzeichnet durch** einen Fall, in dem der transiente Lastzustand bestätigend ist und die Basis-Dauer-Anweisung mit einem Dauer-Ausgleichswert korrigiert, was zu einer korrigierten Dauer-Anweisung führt, die durch Hinzufügen des Dauer-Ausgleichswerts zu der Basis-Dauer-Anweisung und Entzünden des gasförmigen Hauptkraftstoffs, der über den Einlasskanal des Motors in der Brennkammer durch Einführen eines flüssigen Pilotkraftstoffs in die Brennkammer des Motors unter Verwendung der korrigierten Dauer-Anweisungen eingeführt wird, erhalten wird.

4. Verfahren nach einem der Ansprüche 1-3, **dadurch gekennzeichnet, dass** die korrigierte Timing-Anweisung durch Hinzufügen des Timing-Ausgleichswerts zu der Basis-Timing-Anweisung erhalten wird.

5. Verfahren nach einem der Ansprüche 1-3, **dadurch gekennzeichnet, dass** bei geringer und/oder teilweiser Last der Timing-Ausgleichswert negativ ist, was zu einem verzögerten Timing als das Basis-Timing führt.

6. Verfahren nach einem der Ansprüche 1-4, **dadurch gekennzeichnet, dass** bei hoher Last die Dauer im Falle des transienten Lastzustands reduziert wird.

7. Verfahren nach einem der Ansprüche 1-5, **dadurch gekennzeichnet, dass** bei hoher Last das Timing verzögert ist oder gleich wie bei der Basis-Timing-Anweisung im Falle des transienten Lastzustands gehalten wird.

8. Verfahren nach einem der Ansprüche 1-7, **dadurch gekennzeichnet, dass** der Timing-Ausgleichswert von einem vordefinierten Kennfeld verschiedener Kurbelwinkelwerte erhalten wird.

9. Steuersystem (100) zum Steuern eines Betriebs eines Gaskolbenmotors (10) unter Verwendung eines gasförmigen Hauptkraftstoffs und eines flüssigen Pilotkraftstoffs zum Entzünden des gasförmigen Hauptkraftstoffs, wobei die Verbrennung des Gemisches aus magerer Luft und Kraftstoff durch Einspritzen einer kleinen Menge des flüssigen Pilotkraftstoffs und Entzünden des Pilotkraftstoffs im Dieselprozess entzündet wird, umfassend:
- eine Druckmesseinheit (109), die angeordnet ist, um einen Ladeluftdruck zu messen,
- eine Signalempfängereinheit (104), die angeordnet ist, um einen gemessenen Ladeluftdruck zu empfangen,
- eine erste Steuereinheit (106), die angeordnet ist, um die Einführung eines gasförmigen Hauptkraftstoffs in eine Brennkammer des Motors über einen Einlasskanal des Motors zu steuern, und
- eine Transiente-Last-Detektionseinheit (108), die angeordnet ist, um einen transienten Lastzustand auf Basis des einen oder der mehreren Signale, die den Betriebszustand des Motors anzeigen, zu detektieren,
- eine zweite Steuereinheit (110), die angeordnet ist, um die Einführung eines Pilotkraftstoffs in die Brennkammer des Motors zu steuern, unter Verwendung von Basis-Timing-Anweisungen und Basis-Dauer-Anweisungen, umfassend ausführbare Anweisungen zum
• Erfassen des transienten Lastzustands
• falls der transiente Lastzustand nichtbestätigend ist, Entzünden des Hauptkraftstoffs in der Brennkammer durch Einführen eines Pilotkraftstoffs in die Brennkammer des Motors unter Verwendung der Basis-Timing-Anweisungen und der Basis-Dauer-Anweisungen,
• falls der transiente Lastzustand bestätigend ist, Korrigieren einer Basis-Timing-Anweisung mit einem Timing-Ausgleichswert als eine Funktion des gemessenen Ladeluftdrucks und eine Differenz zwischen dem gemessenen Ladeluftdruck und einem vorbestimmten Referenzdruckwert, was zu einer korrigierten Timing-Anweisung führt, und Korrigieren der Basis-Dauer-Anweisung mit einem Dauer-Ausgleichswert auf Basis oder als eine Funktion einer Differenz zwischen dem gemessenen Ladeluftdruck und einem vorbestimmten Referenzdruckwert, was zu einer korrigierten Dauer-Anweisung führt, und
• Entzünden des gasförmigen Hauptkraftstoffs in der Brennkammer durch Einführen eines flüssigen Pilotkraftstoffs in die Brennkammer des Motors (10) unter Verwendung der korrigierten Timing- und Dauer-Informationen.

10. Verbrennungskolbenmotor (10), der mit gasförmigen Kraftstoff arbeitet, wobei der Motor (10) ein Steuersystem (100) nach dem Anspruch 9 umfasst und der Motor (10) mit einem Pilotkraftstoff-Zufuhrsystem (29) versehen ist, das angeordnet ist, um Pilotkraftstoff in eine Vorkammer (40) jeder Brennkammer des Motors einzuführen.

## Revendications

1. Procédé de fonctionnement d'un moteur à gaz (10) utilisant du carburant gazeux principal et du carburant liquide pilote pour enflammer le carburant gazeux principal, dans lequel la combustion du mélange air/carburant pauvre est activée par injection d'une petite quantité de carburant pilote liquide et en enflammant le carburant pilote dans un traitement diesel, le procédé comprenant les étapes suivantes :
- mesure de la pression d'air de suralimentation du moteur,
- génération d'une instruction de synchronisation de base et d'une instruction de durée de base pour l'introduction de carburant liquide pilote sur la base desdits un ou plusieurs signaux indiquant l'état de fonctionnement du moteur,
- introduction de carburant gazeux principal dans une chambre de combustion du moteur par le biais d'un canal d'admission du moteur,
- acquisition d'un statut de charge transitoire sur la base desdits un ou plusieurs signaux indiquant l'état de fonctionnement du moteur,
- lorsque le statut de charge transitoire est non confirmatif, inflammation du carburant principal dans la chambre de combustion par introduction de carburant pilote dans la chambre de combustion du moteur à l'aide des instructions de synchronisation de base et de durée de base,
- et lorsque le statut de charge transitoire est confirmatif,
• l'instruction de synchronisation de base est corrigée avec une valeur de compensation de synchronisation acquise comme une fonction de la pression d'air de suralimentation mesurée et de la différence entre la pression d'air de suralimentation mesurée et une valeur de pression de référence prédéterminée, résultant dans une instruction de synchronisation corrigée et l'instruction de durée de base est corrigée avec une valeur de compensation de durée basée sur ou comme fonction d'une différence entre la pression d'air de suralimentation mesurée et une valeur de pression de référence prédéterminée, résultant dans une instruction de durée corrigée, et
- inflammation du carburant gazeux principal introduit par le biais du canal d'admission du moteur dans la chambre de combustion par introduction de carburant liquide pilote dans la chambre de combustion du moteur à l'aide des instructions de synchronisation et de durée corrigées.

2. Procédé selon la revendication 1, **caractérisé par** l'inflammation du carburant gazeux principal dans la chambre de combustion par introduction de carburant liquide pilote dans une préchambre du moteur à l'aide des instructions de synchronisation et de durée corrigées.

3. Procédé selon la revendication 1, **caractérisé en ce que** lorsque le statut de charge transitoire est confirmatif, l'instruction de durée de base est corrigée avec une valeur de compensation de durée, résultant dans une instruction de durée corrigée obtenue par ajout de la valeur de compensation de durée à l'instruction de durée de base, et le carburant gazeux principal introduit par le biais du canal d'admission du moteur est enflammé dans la chambre de combustion par introduction de carburant liquide pilote dans la chambre de combustion du moteur à l'aide des instructions de durée corrigées.

4. Procédé selon l'une quelconque des revendications 1 à 3, **caractérisé en ce que** l'instruction de synchronisation corrigée est obtenue par ajout de la valeur de compensation de synchronisation à l'instruction de synchronisation de base.

5. Procédé selon l'une quelconque des revendications 1 à 3, **caractérisé en ce qu'**avec une charge faible et/ou partielle, la valeur de compensation de synchronisation est négative, résultant dans une synchronisation plus retardée que la synchronisation de base.

6. Procédé selon l'une quelconque des revendications 1 à 4, **caractérisé en ce qu'**avec une charge élevée, la durée est réduite dans le cas du statut de charge transitoire.

7. Procédé selon l'une quelconque des revendications 1 à 5, **caractérisé en ce qu'**avec une charge élevée, la synchronisation est retardée ou maintenue conformément à l'instruction de synchronisation de base dans le cas du statut de charge transitoire.

8. Procédé selon l'une quelconque des revendications 1 à 7, **caractérisé en ce que** la valeur de compensation de synchronisation est acquise à partir d'une carte de valeurs distinctes d'angle de vilebrequin.

9. Système de commande (100) destiné à commander un fonctionnement d'un moteur à gaz à piston (10) utilisant du carburant gazeux principal et du carburant liquide pilote pour enflammer le carburant gazeux principal, dans lequel la combustion du mélange air/carburant pauvre est activée par injection d'une petite quantité de carburant pilote liquide et en enflammant le carburant pilote dans un traitement diesel, comprenant :
- une unité de mesure de la pression (109) conçue pour mesurer une pression d'air de suralimentation,
- une unité de réception de signaux (104) conçue pour recevoir une pression d'air de suralimentation mesurée,
- une première unité de commande (106) conçue pour commander l'introduction de carburant gazeux principal dans une chambre de combustion du moteur par le biais d'un canal d'admission du moteur, et
- une unité de détection de charge transitoire (108) conçue pour détecter un statut de charge transitoire sur la base desdits un ou plusieurs signaux indiquant l'état de fonctionnement du moteur,
- une deuxième unité de commande (110) conçue pour commander l'introduction de carburant pilote dans la chambre de combustion du moteur, à l'aide d'une instruction de synchronisation de base et d'une instruction de durée de base comprenant des instructions exécutables pour
• acquérir le statut de charge transitoire,
• lorsque le statut de charge transitoire est non confirmatif, enflammer le carburant principal dans la chambre de combustion par introduction de carburant pilote dans la chambre de combustion du moteur à l'aide des instructions de synchronisation de base et de durée de base,
• lorsque le statut de charge transitoire est confirmatif, corriger une instruction de synchronisation de base avec une valeur de compensation de synchronisation acquise comme une fonction de la pression d'air de suralimentation mesurée et de la différence entre la pression d'air de suralimentation mesurée et une valeur de pression de référence prédéterminée, résultant dans une instruction de synchronisation corrigée, et/ou pour corriger l'instruction de durée de base avec une valeur de compensation de durée basée sur ou comme fonction d'une différence entre la pression d'air de suralimentation mesurée et une valeur de pression de référence prédéterminée, résultant dans une instruction de durée corrigée, et
• enflammer le carburant gazeux principal dans la chambre de combustion par introduction de carburant liquide pilote dans la chambre de combustion du moteur (10) à l'aide des informations de synchronisation et de durée corrigées.

10. Moteur à piston à combustion interne (10) fonctionnant avec du carburant gazeux, dans lequel le moteur (10) comprend un système de commande (100) selon la revendication 9 et le moteur (10) est équipé d'un système d'alimentation en carburant pilote (29) conçu pour introduire du carburant pilote dans une préchambre (40) de chaque chambre de combustion du moteur.
